# EUROPEAN PATENT APPLICATION

(11) **EP 2 846 232 A1**
(43) Date of publication of application: **11.03.2015**
(21) Application number: 13813983.7
(22) Date of filing: 02.07.2013
(51) Int. Cl.: G06F 3/041

(54) **METHOD AND DEVICE FOR UNLOCKING TOUCH SCREEN**

(30) Priority: 02.07.2012 CN 201210225344
(71) Applicant: Huawei Device Co., Ltd., Longgang District Shenzhen Guangdong 518129 (CN)
(72) Inventor: XU, Zhihao, Shenzhen Guangdong 518129 (CN)
(74) Representative: Pfenning, Meinig & Partner GbR
(86) International application number: PCT/CN2013/078668
(87) International publication number: WO 2014/005510

(57) **Abstract**

Embodiments of the present invention disclose a method and an apparatus for unlocking a touchscreen. The method includes: first determining whether at least one target track exists in a touch track, where one endpoint of the at least one target track is coincident with a center of one predetermined closed area, and the other endpoint is on an edge of the one predetermined closed area; then, when the at least one target track exists and each target track is separately corresponding to one predetermined closed area, detecting whether a vector of each target track is the same as a gravity vector in direction according to gravity sensing, where the endpoint on the edge of the one predetermined closed area is used as a start point of the vector of the target track, and the endpoint coincident with the center of the one predetermined closed area is used as an end point of the vector of the target track; and at last, performing unlocking when the vector of each target track is the same as the gravity vector in direction. The present invention is applicable to the field of communications systems.

## Description

This application claims priority to Chinese Patent Application No. 201210225344.3, filed with the Chinese Patent Office on July 2, 2012 and entitled "METHOD AND APPARATUS FOR UNLOCKING TOUCHSCREEN", which is incorporated herein by reference in its entirety.

### TECHNICAL FIELD

The present invention relates to the field of communications systems, and in particular, to a method and an apparatus for unlocking a touchscreen.

### BACKGROUND

G-sense (gravitation sense, gravitation sense) is a sensor in a mobile phone, which can sense current acceleration or a direction of gravity of the mobile phone. At present, a G-sense function has become a standard configuration in an Android (Android) smartphone. Meanwhile, it is very common to use the G-sense function to implement various applications in the Android smartphone. However, there is still a gap in implementing unlocking of a touchscreen by using a gravity sensing technology at present.

### SUMMARY

Embodiments of the present invention provide a method and an apparatus for unlocking a touchscreen, so as to implement unlocking of a touchscreen by using a gravity sensing technology, which fills a gap in the prior art.

The following are technical solutions used by the embodiments of the present invention:

A method for unlocking a touchscreen, including:
determining whether at least one target track exists in a touch track, where one endpoint of the at least one target track is coincident with a center of one predetermined closed area, and the other endpoint is on an edge of the one predetermined closed area;
when the at least one target track exists and each target track is separately corresponding to one predetermined closed area, detecting whether a vector of each target track is the same as a gravity vector in direction according to gravity sensing, where the endpoint on the edge of the one predetermined closed area is used as a start point of the vector of the target track, and the endpoint coincident with the center of the one predetermined closed area is used as an end point of the vector of the target track; and
performing unlocking when the vector of each target track is the same as the gravity vector in direction.

An apparatus for unlocking a touchscreen, including:
a determining unit, configured to determine whether at least one target track exists in a touch track, where one endpoint of the at least one target track is coincident with a center of one predetermined closed area, and the other endpoint is on an edge of the one predetermined closed area;
a detecting unit, configured to detect, when the at least one target track exists and each target track is separately corresponding to one predetermined closed area, whether a vector of each target track is the same as a gravity vector in direction according to gravity sensing, where the endpoint on the edge of the one predetermined closed area is used as a start point of the vector of the target track, and the endpoint coincident with the center of the one predetermined closed area is used as an end point of the vector of the target track; and
an unlocking unit, configured to perform unlocking when the vector of each target track is the same as the gravity vector in direction.

According to the method and apparatus for unlocking a touchscreen provided in the embodiments of the present invention, whether at least one target track exists in a touch track is first determined, where one endpoint of the at least one target track is coincident with a center of one predetermined closed area, and the other endpoint is on an edge of the one predetermined closed area; when the at least one target track exists and each target track is separately corresponding to one predetermined closed area, whether a vector of each target track is the same as a gravity vector in direction according to gravity sensing is then detected, where the endpoint on the edge of the one predetermined closed area is used as a start point of the vector of the target track, and the endpoint coincident with the center of the one predetermined closed area is used as an end point of the vector of the target track; and at last, unlocking is performed when the vector of each target track is the same as the gravity vector in direction. The embodiments of the present invention implement an unlocking function of a touchscreen by using a gravity sensing technology, which fills a gap in implementing an unlocking function of a touchscreen by using gravity sensing.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for unlocking a touchscreen according to Embodiment 1 of the present invention;
FIG. 2 is a schematic structural diagram of an apparatus for unlocking a touchscreen according to Embodiment 1 of the present invention;
FIG. 3 is a flowchart of a method for unlocking a touchscreen according to Embodiment 2 of the present invention;
FIG. 4 is a schematic structural diagram of an apparatus for unlocking a touchscreen according to Embodiment 2 of the present invention;
FIG. 5 is a schematic diagram of a vector of a target track according to Embodiment 2 of the present invention;
FIG. 6 is a schematic diagram of vectors of three target tracks according to Embodiment 2 of the present invention; and
FIG. 7 is a schematic diagram of a track of start points of vectors of an infinite number of target tracks according to Embodiment 2 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

To make the advantages of the technical solutions of the present invention clearer, the following describes the present invention in detail with reference to the accompanying drawings and embodiments.

### Embodiment 1

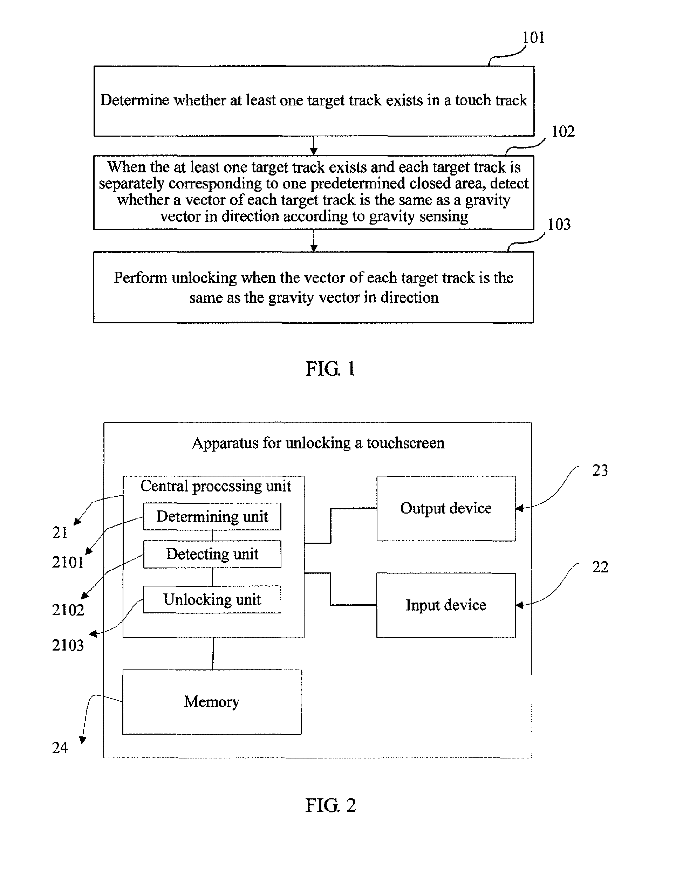

This embodiment provides a method for unlocking a touchscreen. As shown in FIG. 1, the method includes:
101. Determine whether at least one target track exists in a touch track.

One endpoint of the at least one target track is coincident with a center of one predetermined closed area, and the other endpoint is on an edge of the one predetermined closed area, where the predetermined closed area may be a circle, an ellipse, a square, or the like.

Specifically, when the predetermined closed area is a circular area, one endpoint of the at least one target track is coincident with a circle center of one circular area, and the other endpoint is on a circle of the one circular area, where the endpoint on the circle of the one circular area is used as a start point of the vector of the target track, and the endpoint coincident with the circle center of the one circular area is used as an end point of the vector of the target track.
102. When the at least one target track exists and each target track is separately corresponding to one predetermined closed area, detect whether a vector of each target track is the same as a gravity vector in direction according to gravity sensing.

The endpoint on the edge of the one predetermined closed area is used as a start point of the vector of the target track, and the endpoint coincident with the center of the one predetermined closed area is used as an end point of the vector of the target track.
103. Perform unlocking when the vector of each target track is the same as the gravity vector in direction.

When the touchscreen is in an unlocking process, both a position of the predetermined closed area and a direction of a preset gravity vector always remain unchanged. In addition, in the unlocking method provided in the present invention, a plurality of closed areas may be predetermined. Therefore, a problem that a user mistakenly unlocks a terminal because of a misoperation when only one closed area is predetermined can be overcome.

This embodiment provides an apparatus for unlocking a touchscreen. As shown in FIG. 2, an entity of the apparatus may be a mobile terminal. The apparatus includes: a central processing unit 21, an input device 22, an output device 23, and a memory 24, where the input device 22, the output device 23, and the memory 24 are connected to the central processing unit 21.

The central processing unit 21 includes: a determining unit 2101, a detecting unit 2102, and an unlocking unit 2103.

The determining unit 2101 may be configured to determine whether at least one target track exists in a touch track.

One endpoint of the at least one target track is coincident with a center of one predetermined closed area, and the other endpoint is on an edge of the one predetermined closed area, where the predetermined closed area may be a circle, an ellipse, a square, or the like.

The detecting unit 2102 may be configured to: when the determining unit 2101 determines that the at least one target track exists and each target track is separately corresponding to one predetermined closed area, detect whether a vector of each target track is the same as a gravity vector in direction according to gravity sensing, where the endpoint on the edge of the one predetermined closed area is used as a start point of the vector of the target track, and the endpoint coincident with the center of the one predetermined closed area is used as an end point of the vector of the target track.

The endpoint on the one predetermined closed area is used as the start point of the vector of the target track, and the endpoint coincident with the center of the one predetermined closed area is used as the end point of the vector of the target track.

The unlocking unit 2103 may be configured to perform unlocking when the detecting unit 2102 detects that the vector of each target track is the same as the gravity vector in direction.

When the touchscreen is in an unlocking process, both a position of the predetermined closed area and a direction of a preset gravity vector always remain unchanged. In addition, in the unlocking apparatus provided in the present invention, a plurality of closed areas may be predetermined. Therefore, a problem that a user mistakenly unlocks a terminal because of a misoperation when only one closed area is predetermined can be overcome.

According to the method and apparatus for unlocking a touchscreen provided in the embodiments of the present invention, whether at least one target track exists in a touch track is first determined, where one endpoint of the at least one target track is coincident with a center of one predetermined closed area, and the other endpoint is on an edge of the one predetermined closed area; when the at least one target track exists and each target track is separately corresponding to one predetermined closed area, whether a vector of each target track is the same as a gravity vector in direction according to gravity sensing is then detected, where the endpoint on the edge of the one predetermined closed area is used as a start point of the vector of the target track, and the endpoint coincident with the center of the one predetermined closed area is used as an end point of the vector of the target track; and at last, unlocking is performed when the vector of each target track is the same as the gravity vector in direction. The embodiments of the present invention implement an unlocking function of a touchscreen by using a gravity sensing technology, which fills a gap in implementing an unlocking function of a touchscreen by using gravity sensing.

### Embodiment 2

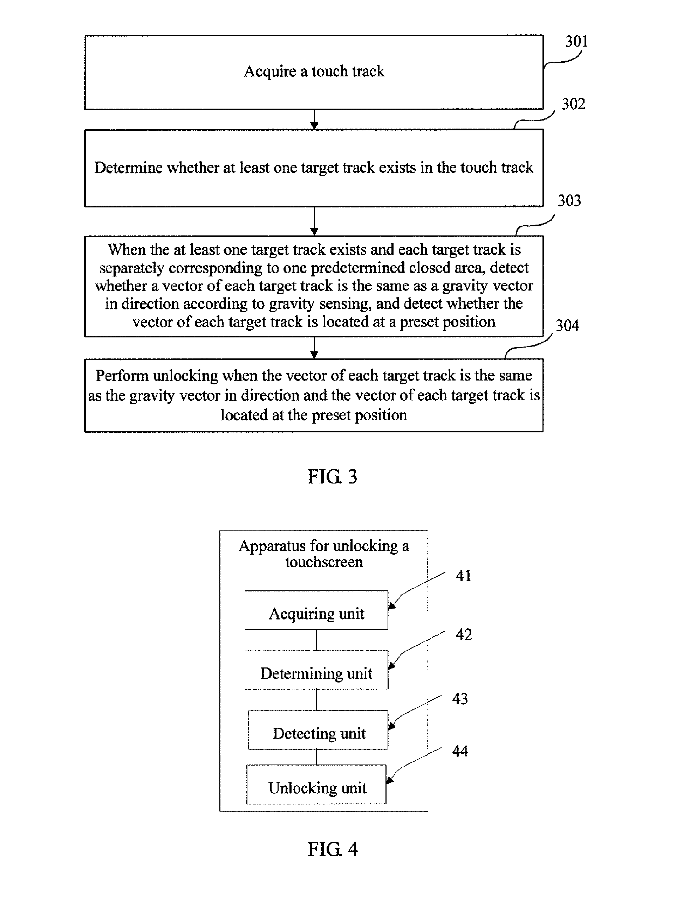

This embodiment provides a method for unlocking a touchscreen. As shown in FIG. 3, the method includes:
301. Acquire a touch track.
302. Determine whether at least one target track exists in the touch track.

One endpoint of the at least one target track is coincident with a center of one predetermined closed area, and the other endpoint is on an edge of the one predetermined closed area, where the predetermined closed area may be a circle, an ellipse, a square, or the like.

Specifically, when the predetermined closed area is a predetermined circular area, one endpoint of the at least one target track is coincident with a circle center of one predetermined circular area, and the other endpoint is on a circle of the one predetermined circular area, where the endpoint on the circle of the one predetermined circular area is used as a start point of the vector of the target track, and the endpoint coincident with the circle center of the one predetermined circular area is used as an end point of the vector of the target track.
303. When the at least one target track exists and each target track is separately corresponding to one predetermined closed area, detect whether a vector of each target track is the same as a gravity vector in direction according to gravity sensing, and detect whether the vector of each target track is located at a preset position.

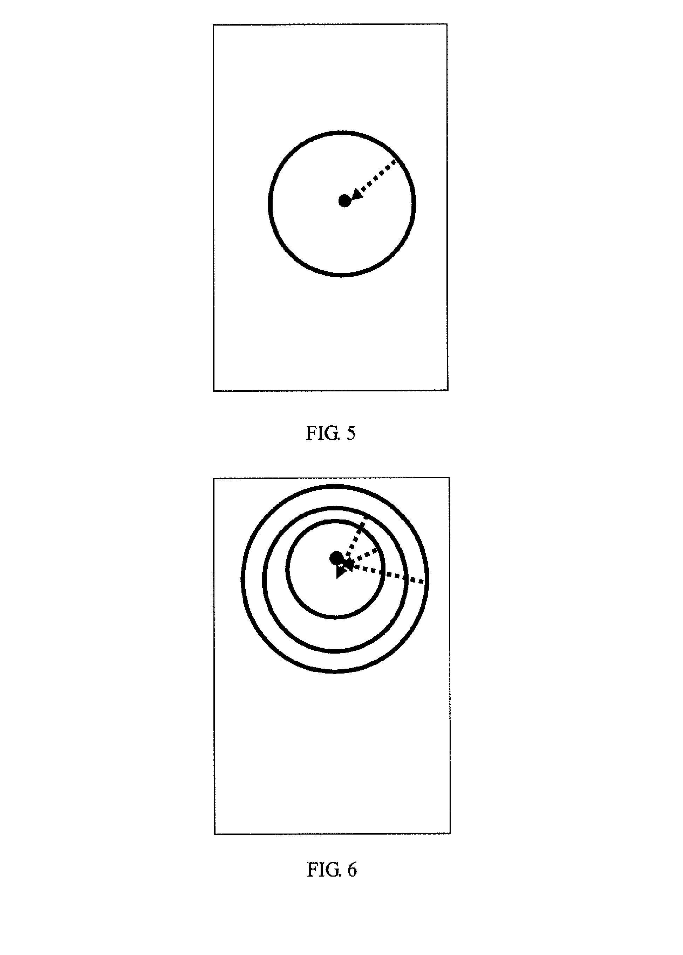

The endpoint on the edge of the one predetermined closed area is used as a start point of the vector of the target track, and the endpoint coincident with the center of the one predetermined closed area is used as an end point of the vector of the target track. A direction of the vector of the target track changes accordingly with slope of the touchscreen. For example, when a predetermined closed area is a circular area, a vector of the one target track is shown in FIG. 5, and vectors of a plurality of target tracks, for example, vectors of three target tracks, may also exist, as shown in FIG. 6.
304. Perform unlocking when the vector of each target track is the same as the gravity vector in direction and the vector of each target track is located at the preset position.

When the touchscreen is in an unlocking process, both a position of the predetermined closed area and a direction of a preset gravity vector always remain unchanged. In addition, in the unlocking method provided in the present invention, a plurality of closed areas may be predetermined; in addition, not only a vector of each target track needs to be the same as the gravity vector in direction but also the vector of each target track needs to be located at a preset position. Therefore, a problem that a user mistakenly unlocks a terminal because of a misoperation when only one closed area is predetermined can be overcome.

Specifically, a user may be notified that a device is unlocked successfully by playing pictures in which the closed area drops.

The method for unlocking a touchscreen provided in this embodiment is applicable to not only vectors of a finite number of target tracks but also vectors of an infinite number of continuously variable target tracks.

This embodiment provides an apparatus for unlocking a touchscreen. As shown in FIG. 4, an entity of the apparatus may be a mobile terminal device. The apparatus includes: an acquiring unit 41, a determining unit 42, a detecting unit 43, and an unlocking unit 44.

The acquiring unit 41 may be configured to acquire a touch track.

The determining unit 42 may be configured to determine whether at least one target track exists in the touch track acquired by the acquiring unit 41.

One endpoint of the at least one target track is coincident with a center of one predetermined closed area, and the other endpoint is on an edge of the one predetermined closed area, where the predetermined closed area may be a circle, an ellipse, a square, or the like.

Specifically, when the predetermined closed area is a circular area, one endpoint of the at least one target track is coincident with a circle center of one circular area, and the other endpoint is on a circle of the one circular area, where the endpoint on the circle of the one circular area is used as a start point of the vector of the target track, and the endpoint coincident with the circle center of the one circular area is used as an end point of the vector of the target track.

The detecting unit 43 may be configured to: when the determining unit 42 determines that the at least one target track exists and each target track is separately corresponding to one predetermined closed area, detect whether a vector of each target track is the same as a gravity vector in direction according to gravity sensing.

The detecting unit 43 may be specifically configured to: when the at least one target track exists and each target track is separately corresponding to one predetermined closed area, detect whether the vector of each target track is the same as the gravity vector in direction according to the gravity sensing, and detect whether the vector of each target track is located at a preset position.

The unlocking unit 44 is configured to perform unlocking when the detecting unit 43 detects that the vector of each target track is the same as the gravity vector in direction.

The unlocking unit 44 may be specifically configured to perform unlocking when the vector of each target track is the same as the gravity vector in direction and the vector of each target track is located at the preset position.

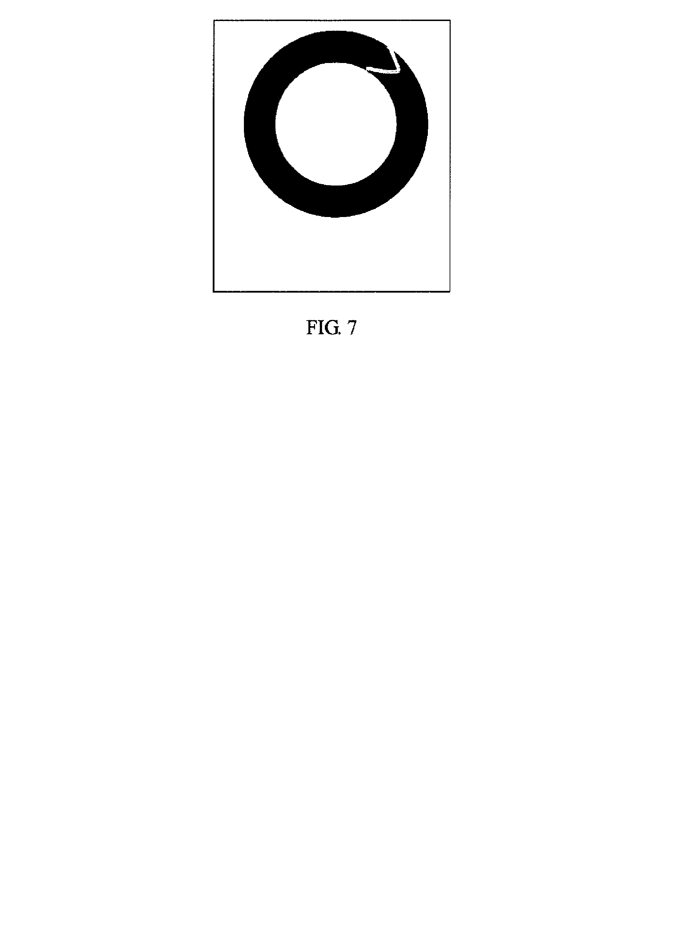

The method and apparatus for unlocking a touchscreen provided in this embodiment is applicable to not only vectors of a finite number of target tracks but also vectors of an infinite number of continuously variable target tracks. In this case, start points of the vectors of the infinite number of target tracks form a continuous curve, as shown in FIG. 7.

According to the method and apparatus for unlocking a touchscreen provided in the embodiments of the present invention, whether at least one target track exists in a touch track is first determined, where one endpoint of the at least one target track is coincident with a center of one predetermined closed area, and the other endpoint is on an edge of the one predetermined closed area; when the at least one target track exists and each target track is separately corresponding to one predetermined closed area, whether a vector of each target track is the same as a gravity vector in direction according to gravity sensing is then detected, where the endpoint on the edge of the one predetermined closed area is used as a start point of the vector of the target track, and the endpoint coincident with the center of the one predetermined closed area is used as an end point of the vector of the target track; and at last, unlocking is performed when the vector of each target track is the same as the gravity vector in direction. The embodiments of the present invention implement an unlocking function of a touchscreen by using a gravity sensing technology, which fills a gap in implementing an unlocking function of a touchscreen by using gravity sensing.

The apparatus for unlocking a touchscreen provided in the embodiment of the present invention can implement the foregoing method embodiments. For details about specific functions, refer to descriptions in the method embodiments, which are not described herein again. The method and apparatus for unlocking a touchscreen provided in the embodiments of the present invention is applicable to the field of communications systems, but are not only limited thereto.

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The storage medium may be: a magnetic disk, an optical disc, a read-only memory (Read-Only Memory, ROM), a random access memory (Random Access Memory, RAM) or the like.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for unlocking a touchscreen, comprising:
determining whether at least one target track exists in a touch track, wherein one endpoint of the at least one target track is coincident with a center of one predetermined closed area, and the other endpoint is on an edge of the one predetermined closed area;
when the at least one target track exists and each target track is separately corresponding to one predetermined closed area, detecting whether a vector of each target track is the same as a gravity vector in direction according to gravity sensing, wherein the endpoint on the edge of the one predetermined closed area is used as a start point of the vector of the target track, and the endpoint coincident with the center of the one predetermined closed area is used as an end point of the vector of the target track; and
performing unlocking when the vector of each target track is the same as the gravity vector in direction.

2. The method for unlocking a touchscreen according to claim 1, wherein when the at least one target track exists and each target track is separately corresponding to one predetermined closed area, the detecting whether a vector of each target track is the same as a gravity vector in direction according to gravity sensing comprises:
when the at least one target track exists and each target track is separately corresponding to one predetermined closed area, detecting whether the vector of each target track is the same as the gravity vector in direction according to the gravity sensing, and detecting whether the vector of each target track is located at a preset position; and
the performing unlocking when the vector of each target track is the same as the gravity vector in direction comprises:
performing unlocking when the vector of each target track is the same as the gravity vector in direction and the vector of each target track is located at the preset position.

3. The method for unlocking a touchscreen according to claim 1, wherein the predetermined closed area is a circular area or an elliptical area.

4. The method for unlocking a touchscreen according to claim 1 or 3, wherein when the predetermined closed area is a predetermined circular area, one endpoint of the at least one target track is coincident with a circle center of one predetermined circular area, and the other endpoint is on a circle of the one predetermined circular area.

5. The method for unlocking a touchscreen according to claim 1 or 3, wherein when the predetermined closed area is a circular area, an endpoint on a circle of the one circular area is used as a start point of the vector of the target track, and an endpoint coincident with a circle center of the one circular area is used as an end point of the vector of the target track.

6. The method for unlocking a touchscreen according to claim 1, before the determining whether at least one target track exists in a touch track, further comprising:
acquiring the touch track.

7. An apparatus for unlocking a touchscreen, comprising:
a determining unit, configured to determine whether at least one target track exists in a touch track, wherein one endpoint of the at least one target track is coincident with a center of one predetermined closed area, and the other endpoint is on an edge of the one predetermined closed area;
a detecting unit, configured to: when the at least one target track exists and each target track is separately corresponding to one predetermined closed area, detect whether a vector of each target track is the same as a gravity vector in direction according to gravity sensing, wherein the endpoint on the edge of the one predetermined closed area is used as a start point of the vector of the target track, and the endpoint coincident with the center of the one predetermined closed area is used as an end point of the vector of the target track; and
an unlocking unit, configured to perform unlocking when the vector of each target track is the same as the gravity vector in direction.

8. The apparatus for unlocking a touchscreen according to claim 7, wherein:
the detecting unit is specifically configured to: when the at least one target track exists and each target track is separately corresponding to one predetermined closed area, detect whether the vector of each target track is the same as the gravity vector in direction according to gravity sensing, and detect whether the vector of each target track is located at a preset position; and
the unlocking unit is specifically configured to perform unlocking when the vector of each target track is the same as the gravity vector in direction and the vector of each target track is located at the preset position.

9. The apparatus for unlocking a touchscreen according to claim 7, wherein the predetermined closed area is a circular area or an elliptical area.

10. The apparatus for unlocking a touchscreen according to claim 7 or 9, wherein when the predetermined closed area is a circular area, one endpoint of the at least one target track is coincident with a circle center of one circular area, and the other endpoint is on a circle of the one circular area.

11. The apparatus for unlocking a touchscreen according to claim 7 or 9, wherein when the predetermined closed area is a circular area, an endpoint on a circle of the one circular area is used as a start point of the vector of the target track, and an endpoint coincident with a circle center of the one circular area is used as an end point of the vector of the target track.

12. The apparatus for unlocking a touchscreen according to claim 7, further comprising:
an acquiring unit, configured to acquire the touch track.
